# EUROPEAN PATENT APPLICATION

(11) **EP 4 742 154 A1**
(43) Date of publication of application: **13.05.2026**
(21) Application number: 25162409.4
(22) Date of filing: 07.03.2025
(51) Int. Cl.: G06T 7/12, G06T 7/62

(54) **DEVICE FOR LAYER THICKNESS MEASUREMENT AND METHOD THEREFOR**

(30) Priority: 12.11.2024 WO PCT/CN2024/131468
(71) Applicant: Leica Microsystems CMS GmbH, 35578 Wetzlar (DE)
(72) Inventor: JIAO, Linqi, 35578 Wetzlar (DE); HU, Baiyang, 35578 Wetzlar (DE)
(74) Representative: Paustian & Partner Patentanwälte mbB

(57) **Abstract**

A first aspect of the present disclosure is related to an imaging device for determining a thickness of a layer comprised in an image,
configured to:
- obtain an image of a sample with one or more layers ;
- obtain from a user interface a first estimation information indicating a location of a first edge of a layer;
- obtain from the user interface a second estimation information indicating a location of a second edge of the layer;
- determine the first edge of the layer based on the first estimation information;
- determine the second edge of the layer based on the second estimation information;
- determine a distance between the first edge and the second edge.

## Description

### Technical Field

This disclosure is related to devices for thickness measurement of sample layers and to methods to operate devices for thickness measurement.

### Background

In imaging, such as microscopic analysis of a sample, thickness of one or more layers of or within a sample can be an important parameter. Current products on the market require users to manually identify points between which a distance is measured. These operations are time-consuming and complex, and may require extensive manual input and user knowledge. Automatic measurement methods, which also exist, often measure distances that do not represent a thickness of a desired layer, because they identify wrong measurement points. Improvements for layer thickness measurement are desirable.

### Summary

An object of the present disclosure is to improve a layer thickness measurement in imaging systems.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to an imaging device for determining a thickness of a layer comprised in an image,
configured to:
- obtain an image of a sample with one or more layers ;
- obtain from a user interface a first estimation information indicating a location of a first edge of a layer;
- obtain from the user interface a second estimation information indicating a location of a second edge of the layer;
- determine the first edge of the layer based on the first estimation information;
- determine the second edge of the layer based on the second estimation information;
- determine a distance between the first edge and the second edge.

To obtain an image can comprise receiving and/or a fetching of image information related to this image. Additionally or alternatively, obtaining an image can comprise determining this information based on other received/fetched information.

The imaging device can be configured to examine objects that are difficult to be seen by the naked eye. An example of the imaging device can be a microscope, such as a widefield or brightfield microscope, a transmitted light microscope, a reflected light microscope, a phase contrast microscope, etc. Microscopes also include macroscopes and stereoscopes. Another example for the imaging device is an endoscope, and another example is an exoscope.

The sample can be of any sample type that can be examined by said imaging device and can be an organic or an inorganic sample. Additionally or alternatively, the sample can comprise any other elements or molecules. For example, the sample can be a tissue or rock or made of another material, e.g., plastic or metal or a compound thereof. The sample can be opaque or transparent or in any state in between.

Because of the one or more layers that are visible in the image taken by the imaging device, the image shows corresponding edge lines, wherein two adjacent layers may be separated from each other by one of the edge lines.

The user interface can be a component of the imaging device. Alternatively, the user interface can be separate from the imaging device and connected to it for data transmission. In particular, the user interface may comprise a display, configured to show the image obtained by the imaging device to a user. The user interface may has an input module via which the user can input information, for example the first and the second estimation information. The user interface can, for instance, comprise e.g. one or more of the following: a touch display, a pointing device (e.g., a computer mouse or trackball or trackpad, a computer keyboard, a stylus, etc.), an audio-detecting device, and/or a gesture detecting device.

To determine the first and the second edge of one of the layers shown in the image, the imaging device is configured to receive or obtain user inputs characterizing the first and the second estimation information, respectively, by means of the user interface. For example, the user marks a shape that follows and/or is congruent with the edges or at least one or more discrete points located on the respective edge. Additionally or alternatively, the user provides information unrelated to a single pattern in the image, i.e. based on the users experience only and/or on a plurality of imaged artifacts. By means of an algorithm (which can be a software module), being a component of the imaging device, the edges of said layer are determined basing on the obtained first and second estimation information.

A determination of the first and/or the second edge may be based on interpolation, extrapolation of the user information. Additionally or alternatively, a determination may be based on a model to compute an edge based on user information. Additionally or alternatively, a determination may be based on a machine-learning algorithm, such as a neuronal network, that is fed with the user information about the first and/or the second edge. The device can operate on single images, but also on (live image streams. In the latter case, the device can be configured to obtain a first and second estimation information for at least one image of the image stream and then to determine the first and the second edge throughout the whole image stream).

The algorithm can include particularly an edge recognition process that is aided by the information gained from the user input. By these means an edge can even be detected if at least part of the edge information is below a noise level of the image.

The imaging device is further configured to determine a distance between the first edge and the second edge, especially by means of the already aforementioned algorithm and/or by a further algorithm (which can be a further software module), being a component of the imaging device. In other words: The imaging device is configured to measure the thickness of the layer that is on the image defined by its edges which are identified by the user.

The imaging device is insofar advantageous as it is user-friendly and/or may reduce human judgment errors to determine the layer edges and therefore the layer thickness. That is because very little user operation is needed to provide necessary data to the imaging device so that it, especially its algorithm or algorithms, can perform the actions/operations to determine the edges of the layer and the distance between these layers. So, the layer edges and subsequently the layer thickness can be detected based on complementary human and automated knowledge.

Optionally, the imaging device comprises a component configured to provide the measured distance (i.e., the layer thickness) to the user, for example a visual and/or audio display, a printer, etc. Said component can be part of the user interface.

An embodiment of the first aspect is related to an imaging device for determining a thickness of a layer within an image,
wherein the first and/or second estimation information can comprise one or more of:
- one or more points ,
- one or more lines, or
- one or more areas .

The imaging device may be configured to obtain the respective estimation information from the user in form of input data characterizing the one or more points, the one or more lines and/or the one or more areas. The imaging device may further or alternatively be configured to determine, i.e., to interpolate and/or to extrapolate, the first and/or the second layer edges based on the input point(s), line(s) and/or area(s), for instance, by means of the already aforementioned algorithm or a further algorithm (which can be a software module), being a component of the imaging device. The user is able to input the point(s), line(s) and/or area(s) in a particularly simple manner using the user interface, for instance performing a touch input. The point(s), line(s) and/or area(s) then serve as the first estimation information and the second estimation information, or based on the point(s), line(s) and/or area(s), the first estimation information and the second estimation information are generated.

As far as the layer edges are determined based on the information (point(s), line(s), and/or area(s)) entered by the user, she/he does not have to laboriously identify the complete edge and provide its curvature to the system. Instead, the system (i.e., the imaging device) may identify the layer edges by itself, starting at the respective point(s) and/or area(s), indicating that a line shown in the image on which the user has set the point(s) and/or area(s) actually is a layer edge line, which represents a layer edge in the image, and not any other streak (non-edge line), which may represent any other visible edge-like structure of the sample in the image except a layer edge. As far as the layer edges are determined based on the line(s) entered by the user, he can indicate the exact curvature of a layer separating edge line and thereby facilitate the layer edge detection or determination.

An embodiment of the first aspect is related to an imaging device for determining a thickness of a layer within an image,
wherein the estimation information can comprise an area provided by a brush tool over a user interface.

It is to be understood, that the brush tool is a virtual tool; for example, it appears on a display of the user interface and/or of another user interface, being part of the imaging device or connected to it, e.g. in form of a mouse pointer symbol, a touch input, and/or the like. This indicates to the user that a brush marking mode for marking the layer edges (especially to input the area(s)) is activated. It is intended that the user uses the virtual brush tool to trace a part of the layer edge or the entire layer edge. In doing so, the user marks at least one area encompassing the respective edge. That means, the brush tool can be engaged to provide one or more of the areas according to the embodiment explained above. By means of the brush tool the first and/or the second estimation information can be provided along an edge that varies greatly and/or has a particularly large number of curves. Nevertheless, the curvature of the layer edge may be determined particularly accurately.

An embodiment of the first aspect is related to an imaging device for determining a thickness of a layer within an image,
configured to:
- adjust a parameter of the brush tool, in particular one or more of
   -- a width of the brush stroke;
   -- a color of the brush stroke;
   -- an opacity of the brush stroke.

Embodiments with these characteristics can have two general implementation forms.

In a first general implementation form, one or more brush stroke parameters are adjusted by the device (or a function of the device), such that an information about an edge detection can be displayed to the user. For example, a user provides information about an edge with a brush tool and depending on the result of the edge identification, the brush stroke is colored differently:
- green for a confident edge detection result;
- orange for a less confident edge identification result;
- red for no edge identification.

By a result-dependent parametrization of the brush stroke, the user can be informed in a differentiated way about the edge detection result and where she/he may want to provide further information. In another implementation the device is configured to adapt a width of a (user-provided) brush stroke after an edge detection has been performed. This can be done such that it is indicated where an edge was found exactly and where multiple edge candidates where found. For example, the width of a brush stroke is reduced to a detected edge (in case an edge was found) and/or the width of a brush stroke is widened or reduced to an area in which multiple edge candidates where found. All alternatives can in particular be applied to a single user-provided brush stroke, such that all possible result types are indicated for the user.

In a second general implementation form, one or more brush stroke parameters are adjusted by a user and the adjustment information is received over a user interface. Because of this, the user can provide curtailed information about an edge to the device. For example, the user can exclude other edges or edge-like structures (cf. above: any other streak in the image representing any other visible edge-like structure of the sample except a layer edge) by adapting the size of the brush tool, especially its width.

A brush stroke can also provide information about a likelihood of an edge in the area indicated with the brush tool. For example, the center of a brush stroke may provide a high likelihood of an edge being in the indicated area and the outer regions of the brush stroke may provide a small likelihood of an edge being in the indicated area. In particular a likelihood over a width of a brush stroke of a virtual brush may be distributed equally or normally (e.g. with the highest likelihood being in the center of the brush stroke). Different user likelihoods in this context can also be provided by different colors of a brush stroke.

This may allow effective and on the same time fast indication of an edge within an image, either as an input (from the user to the device) or (as an output by the device to the user).

An embodiment of the first aspect is related to an imaging device for determining a thickness of a layer within an image,
configured to:
- determine an edge based on the first and/or second estimation information based on one or more of:
   -- an intensity difference within the respective estimation information;
   -- a spectral difference within the respective estimation information;
   -- a color difference within the respective estimation information;
   -- a trained machine learning algorithm applied to the respective estimation information, in particular to the first and second estimation information.

So, the imaging device is configured to analyze the data entered by the user, i.e., the respective estimation information, and to provide as a result of said analysis, whether the first and/or the second estimation information contains image data and/or defines and/or specifies image data that indicates the presence of an edge or at least a section of a layer edge within the respective estimation information. Therefore, the imaging device can have an imaging processor configured to perform said analysis, that means to determine an intensity, spectral and/or color difference between two of the layers which are in the image adjacent to each other and separated by the layer edge the user indicated by providing the first and the second estimation information.

Additionally or alternatively, the imaging device can have a machine learning algorithm, by means of which in the gathered image data the two adjacent layers and consequently their common layer edge can be identified. The machine learning algorithm can be trained to recognize repeating patterns within a provided brush stroke or area. In particular, the machine learning algorithm can be designed to carry out the edge recognition process.

Hence, the layer edge can be automatically detected within the estimation information provided by the user.

An embodiment of the first aspect is related to an imaging device for determining a thickness of a layer within an image,
configured to:
- if the determination of a first and/or a second edge results in a plurality of first or second edge candidates, automatically determine a first edge based on the first edge candidates and/or a second edge based on the second edge candidates.

For example, the imaging device is configured to automatically select one of the first edge candidates as a first layer edge. Alternatively or additionally, the imaging device is configured to automatically select one of the second edge candidates as a second layer edge. The imaging device can, alternatively or additionally, be configured to automatically select a first edge by joining two or more of the first edge candidates, and - alternatively or additionally - to automatically select a second edge by joining two or more of the second edge candidates. So, the edge or edges can be selected without user intervention. Additionally or alternatively, the device can select between a plurality of edge candidates, such that only a few candidates are joint for a layer edge and/or such that only a single candidate is selected as a layer edged. This selection can be realized by involving a further software-based module that performs the candidate reduction, i.e. the selection. The module may comprise a machine learning algorithm trained to select one or more edges from a plurality of edge candidates.

An embodiment of the first aspect is related to an imaging device for determining a thickness of a layer within an image,
configured to:
- determine the first and/or second edge as one or more of:
   -- the edge candidate with the largest length;
   -- the edge candidate along which a maximal intensity change is determined;
   -- the edge candidate along which the sum of intensity changes is maximal.

The imaging device may be configured to automatically select one of the identified edge candidates and to classify it as a layer edge based on the lengths of said edge candidates. In this case, the imaging device may indicate the longest edge candidate (i.e., the one having the largest length) as the actual layer edge. Alternatively or additionally, the imaging device may be configured to automatically select one of the identified edge candidates and to classify it as a layer edge based on the intensity changes between the layers that are separated by the edge candidates. Accordingly, the imaging device may indicate the one of the edge candidates representing the strongest intensity transition between two areas of the sample (i.e., two layers) as the actual layer edge. The imaging device can alternatively or additionally be configured to select one of the identified edge candidates and to classify it as a layer edge based on the sum of intensity changes along the respective edge candidates. That means, the imaging device identifies the one of the edge candidates along which the sum of intensity changes is maximal. This edge candidate identified is to be classified by the imaging device as the actual edge layer. Thereby, one or more edges can be detected particularly accurately and reasonably. In addition, the identification may be used as a plausibility check to verify that a selected edge candidate is actually a layer edge and not just an structure of a sample that can be confused with a layer edge.

An embodiment of the first aspect is related to an imaging device for determining a thickness of a layer within an image,
configured to:
- if the determination of a first and/or a second edge results in a plurality of first or second edge candidates:
   -- display the edge candidates at a user interface; -- obtain a user information related to one or more edge candidates;
   -- determine the first edge and/or the second edge based on the obtained user information.

A user's experience-based knowledge is therefore used in an advantageous way, in particular to avoid ambiguities when identifying the actual layer edges and, if to eliminate such ambiguities for further determination processes. In particular, the obtained user information can be used to train the machine learning algorithm to further improve its ability to distinguish automatically non-edge structures from actual layer edges shown in the image.

An embodiment of the first aspect is related to an imaging device for determining a thickness of a layer within an image,
configured to:
- divide the first edge and/or the second edge into multiple segments ;
- determine a distance of the layer for each segment.

The segments can be the same size, i.e., length. Alternatively, the segments can be of different sizes/lengths. It is further conceivable according to this embodiment that the layer edges are divided into some segments of equal size and some segments of unequal size. In general, distances between different distance estimations can be provided beforehand by the user and/or adjusted on-line by the user, e.g. with a mouse.

The imaging device is configured to measure a distance between each identified segment, so a distance estimation for different parts of the layer interjacent the segmented edge layers can be provided.

An embodiment of the first aspect is related to an imaging device for determining a thickness of a layer within an image,
configured to:
- determine multiple distance candidates at different locations between the first and the second edge;
- determine the distance as the distance candidate with the shortest distance.

The imaging device may be configured to measure the distance between the layer edges at multiple points of the edges and identify the shortest one of the measured distance candidates. The imaging device may further be configured to provide the shortest one of the distances, for example, to the user by means of the user interface, the display etc. In this manner, a global minimum of the distance between the edges, that means the layer thickness, can be determined in a particularly efficient way.

An embodiment of the first aspect is related to an imaging device for determining a thickness of a layer within an image,
configured to:
- determine further multiple distance candidates in a vicinity of the previously determined distance; and
- determine a second distance as the further distance candidate with the shortest distance.

To improve the result gathered by determining the multiple distance candidates at different locations between the first and the second edge and determining the shortest one of the distance candidates as the global minimum of the layer thickness, according to this embodiment, the imaging device may be configured to measure further distances in a near vicinity of the distance candidate representing the global minimum of the layer thickness.

For example, one or more further distance candidates can be determined above the previously determined distance, and, alternatively or additionally, one or more further distance candidates can be determined under the previously determined distance. Then, the imaging device may further be configured to identify the shortest one of the further distance candidates and classify it as the further shortest distance between the layer edges, i.e., as the further global minimum of the layer thickness. The step of determining the further distance candidates and the step of determining the shortest one of the further distance candidates both can be in particular repeated until no shorter distance candidate between the layer edges can be found. As a result of this embodiment, the overall global minimum of the layer thickness can be determined particularly precisely.

An embodiment of the first aspect is related to an imaging device for determining a thickness of a layer within an image,
configured to:
- determine a protruding point at the first edge and/or at the second edge; and
- determine the distance based on one or both protruding points.

This is insofar advantageous, as a shortest distance between the first and the second layer edge may occur with higher likelihood from a protruding point. This may even be the global minimum of the layer thickness. For determining the respective protruding point, the imaging device can be configured to identify the point of the respective layer edge, which extends furthest in direction to the opposed layer edge. Additionally or alternatively, a protruding point of an edge can be determined by identifying the edge and afterwards analyzing the spectrum along the edge line. High frequencies may indicate protruding points from which a distance measurements may be started.

An embodiment of the first aspect is related to an imaging device for determining a thickness of a layer within an image,
configured to:
- determine a centerline of the layer based on the determined first and second edge ; and
- determine one or more distances of the layer , wherein one distance is determined as a line between the two edges that perpendicularly crosses the centerline.

A centerline may be determined in the middle between two layer edges. For example, as a piece-wise straight line or as a non-straight line that is connecting all center-points between two layer edges.

In order to determine a distance, a straight connecting line that intersects the centerline perpendicularly and meets both edges may be determined. This line maybe bisected by the centerline. The connecting line comprises two bisectors, wherein the bisectors are arranged linearly and each may be arranged between one of the edges and the centerline. The length of the connecting line (that means the sum of the lengths of the two respective bisectors) is a distance between the two edges.

There may be as many distances between the edges as there can be determined different connecting lines. This method may be particularly efficient for determining the shortest distance between edges; it requires only the selection or output of the shortest determined distance from all obtained distances.

An embodiment of the first aspect is related to an imaging device for determining a thickness of a layer within an image,
configured to:
- determine a convex side of the first and/or second edge and/or of a part of the first and/or second edge ; and
- determine a distance between the opposing sides of the respective edge.

This embodiment can be useful to measure curvatures or distances within a single one of the first and/or second layer edges, for example, to examine protrusions of a layer penetrating the layer adjacent. The respective protuberant layer edge has, for instance, substantially the form of the letter U, V or Omega or of a parabola or the like and encompasses a protuberant layer area. According to this embodiment, the imaging device is configured to determine a first protuberant point and at least a second protuberant point on the respective layer edge, wherein the first protuberant point is located on an ascending branch of said layer edge, whereas the second protuberant point is located on a descending branch of the same layer edge. The imaging device is further configured to measure the straight distance between the first protuberant point and the second protuberant point, thereby determining the distance between the opposing sides or branches of the protuberant edge layer or edge layer part. Optionally, the process according to the embodiment described before can be utilized to render a centerline of the protrusion, i.e., the convex side of the respective layer edge, and to determine the expansion of the protuberant layer area with respect to the centerline. Another option is to set a borderline of the protuberant layer area, wherein the distance between the opposing sides or branches of the protuberant edge layer and the borderline are parallel to each other.

An embodiment of the first aspect is related to an imaging device for determining a thickness of a layer within an image,
configured to:
- determine a plurality of thicknesses for the layer;
- determine one or more of:
   -- a maximum thickness of the layer;
   -- a minimum thickness of the layer;
   -- an average thickness of the layer;
   -- a parameter that indicates a variation of a thickness of a layer.

This provides the user with a comprehensive overview of the dimensions and/or shape of the layer. The parameter that characterizes the thickness variance can, for example, indicate whether the layer's thickness increases or decreases along a specified or specifiable reference direction of the layer.

A second aspect of the present disclosure is related to a method for determining a thickness of a layer within an image,
comprising the steps:
- obtaining an image of a sample with one or more layers ;
- obtaining from a user interface a first estimation information indicating a location of a first edge of a layer;
- obtaining from the user interface a second estimation information indicating a location of a second edge of the layer;
- determining the first edge of the layer based on the first estimation information;
- determining the second edge of the layer based on the second estimation information;
- determining a distance between the first edge and the second edge.

The method can be computer-implemented. Its method steps can be carried out by a computer system. Using the method allows to detect edges based on complementary human and automated knowledge. Particularly, the method can be paused at certain points in order to wait for and/or receive user input.

A third aspect of the present disclosure is related to a computer program with program code,
for performing the method according to the preceding aspect when the computer program is run on a processor.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a distance measurement according to an embodiment of this disclosure.
Fig. 2 illustrates a distance measurement according to an embodiment of this disclosure.
Fig. 3 illustrates a distance measurement according to an embodiment of this disclosure.
Fig. 4 illustrates a distance measurement according to an embodiment of this disclosure.
Fig. 5 illustrates microscope systems for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure and which illustrate specific aspects in which the present disclosure can be understood. Identical reference signs refer to identical or at least functionally or structurally similar features.

### Detailed description

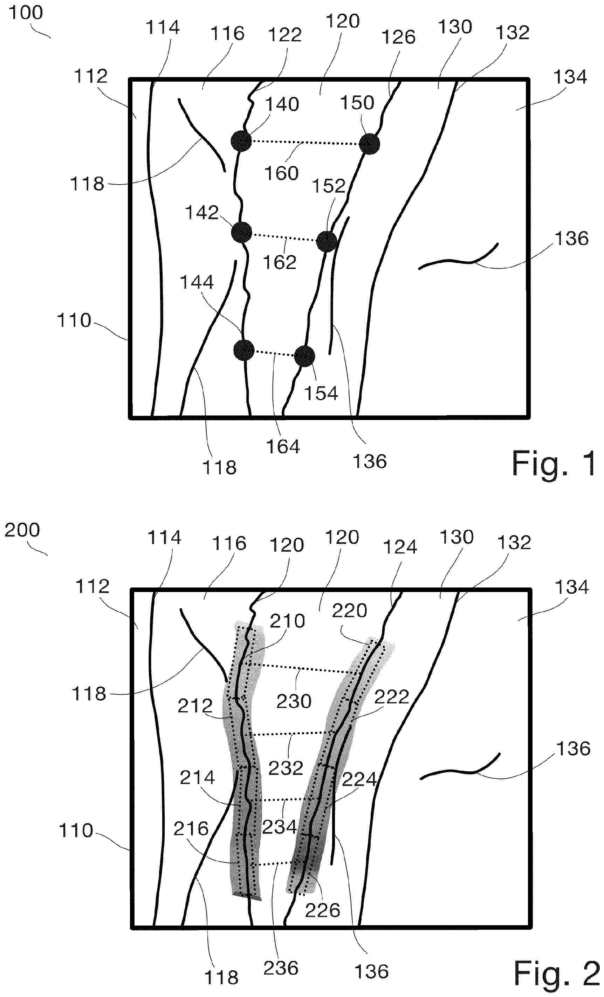

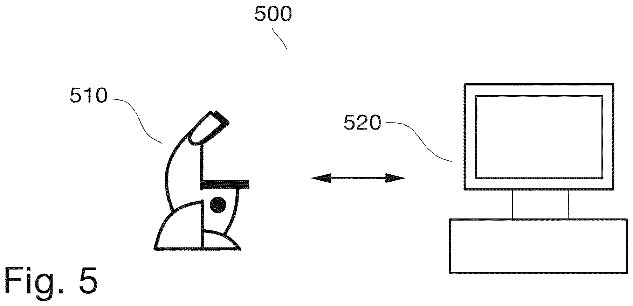

In Fig. 1, Fig. 2 and Fig. 3 image 100, 200, 300 are depicted showing a sample 110 of a to be examined object, having multiple layers 112, 116, 120, 130, 134. The images 100, 200, 300 were taken by an imaging device, especially by means of a microscope 510 (see Fig. 5).

The image 100 can be a still picture (like a photograph) or a moving playback of a video stream. Here in the example five layers are visible in the image 100, namely a first left layer 112, a second left layer 116, a center layer 120, a first right layer 130, and a second right layer 134. Thereby, the first left layer 112 and the second left layer 116 are separated from each other by an edge 114, the second left layer 116 and the center layer 120 are separated from each other by an edge 122, the center layer 120 and the first right layer 130 are separated from each other by an edge 124, and the first right layer 130 and the second right layer 134 are separated from each other by a edge 132. In image 100, the layer edges 114, 122, 124, 132 are represented through a respective layer edge line. Further, non-edge lines or streaks are indicated in image 100 by reference numerals 118 and 136. The streaks 118, 136 visible in the image 100 result from edge-like structures of the to be examined object.

The imaging device or the microscope 510, respectively, is configured to carry out a method for determining a thickness of one or more of the layers 112, 116, 120, 130, 134 visible in image 100. In the following, this method will be described exemplarily with reference mainly to the center layer 120. It is to be understood, that the method is applicable analogously to one or both of the layers 116, 130, too, since they are each interposed between the edges 114, 122 and 124, 132, respectively.

So, by means of the imaging device or the microscope 510 the image 100, 200, 300 of the sample 110 is obtained, wherein the sample 110 comprises the layers 112, 116, 120, 130, 134. Additionally, a first estimation information and a second estimation information are obtained from a user interface, wherein the first estimation information indicates a location of a first edge of one of the layers 112, 116, 120, 130, 134 and the second estimation information indicates a location of a second edge of the same of the layers 112, 116, 120, 130, 134. For example, if the user wants to gain information about the center layer 120, he is intended to provide the first and second estimation information about said center layer 120, i.e., about a position of the layer edges 122 and 124, because center layer 120 is interjacent the edges 122 and 124. Furthermore, the method comprises the step of determining the first edge, here the edge 122, of the center layer 120 based on the first estimation information and to determine the second edge 124 of the center layer 120 based on the second estimation information. In the present example and as the user gives the first and second estimation information characterizing the edges 122 and 124, respectively, the imaging device determines the position and curvature of the edges 122 and 124. **The** method further comprises a step of determining a distance between the first edge, here the edge 122, and the second edge, here the edge 124.

As can be seen in Fig. 1, which illustrates a distance measurement according to an embodiment of this disclosure, the first and/or second estimation information can comprise one or more points. **The** user provided the points 140, 142 and 144, each located on the first edge 122 of the center layer 120. Additionally, the user provided the positions of the points 150, 152, 154, each located on the second edge 124 of the center layer 120. Because of this at least fragments of the edges 122 and 124 are known to the system, i.e., to the imaging device or the microscope 510. **To** determine one distance or two or more distances between the edges 122 and 124, a respective distance 160, 162, 164 between the edge points 140 and 150, 142 and 152, 144 and 154, respectively, is measured. The distances 160, 162, 164 are visualized in image 100 by respective point linking lines. In an embodiment a protruding one of the points 140, 142, 144 and/or a protruding one of the points 150, 152, 154 are/is determined, and the distance is determined based on the protruding point or points. Additionally or alternatively, the first and/or second estimation information can comprise one or more lines, for example lines that the user has created by tracing the respective edges 122, 124. One of these lines can, for example, run between points 140 and 142 or between points 152 and 154 etc.

In an embodiment, the first and/or second estimation information used to determine the edge 122 and/or 124 are/is determined based on an intensity, spectral and/or color difference between the layers 116, 120 and/or 120, 130 which are in image 100 adjacent to each other and separated by edge 122 and 124, respectively. Additionally or alternatively, a trained or trainable machine learning algorithm can be applied to the first and second estimation information.

According to an embodiment, a plurality of thicknesses for the layer 120 is determined, and a maximum thickness of layer 120, a minimum thickness of layer 120 and/or an average thickness of layer are/is determined. Alternatively or additionally, a parameter is determined, that indicates a variation of a thickness of layer 120. Said parameter characterizing the thickness variance can, for example, indicate whether layer's 120 thickness increases or decreases along a specified or specifiable reference direction of layer 120, for instance, along its longitudinal extension direction.

By means of one or more embodiments described herein, multiple distance candidates at different locations between the first edge 122 and the second edge 124 may be determined. Then, the distance candidate with the shortest distance is determined as the distance between the layer edges 122 and 124.

In Fig. 1 the shortest distance candidate may initially lead, for example, to the distance 162. In Fig. 1 it is further to see, that, according to one embodiment, further multiple distance candidates are determined, each of them located in a vicinity of the previously determined distance 162. Subsequently, a second distance is determined as the further distance candidate with the shortest distance. With reference to Fig. 1, the shortest one of the further distance candidates leads to distance 162 as the second distance between the edges 122 and 124.

Fig. 2 illustrates a distance measurement according to an embodiment of this disclosure. One can see in Fig. 2 that the first and/or second estimation information can comprise one or more areas, here areas 210, 212, 214, 216, 220, 222, 224, 226 are depicted in image 200 exemplarily. In Fig. 2 the areas 210, 212, 214, 216 and 220, 222, 224, 226 each encompass a section or segment of edges 122 and 124, respectively. To determine one distance or two or more distances between the edges 122 and 124, a respective distance 230, 232, 234, 236, between the areas 210 and 220, 212 and 222, 214 and 224, 216 and 226, respectively, is measured. For example, the distances 230, 232, 234, 236 between the two corresponding areas 210 and 220, 212 and 222, 214 and 224, 216 and 226, respectively, can be measured between the midpoints of the areas.

According to one embodiment, it applies to the method that one or more of the areas 210, 212, 214, 216, 220, 222, 224, 226 can be provided by the user as the first or second estimation information, using a brush tool. Therefore, the user wields the brush tool, which is a virtual data input tool provided on the user interface, at least roughly along the edge he wants to mark. Since the brush tool is wider than a line representing the edge, it is easy for the user to cover the respective edge with a brush stroke. According to one embodiment, the width of the brush tool can be adapted to the requirements of the image 200, for instance to its scale and/or magnification factor, to avoid covering non-edge elements during conducting said brush stroke.

According to an embodiment, the first edge 122 and/ or the second edge 124 is divided into multiple segments of the same or of different size. To determine one distance or two or more distances between the edges 122 and 124, a respective distance between one segment of the first edge 122 and one segment of the second edge 124 is measured.

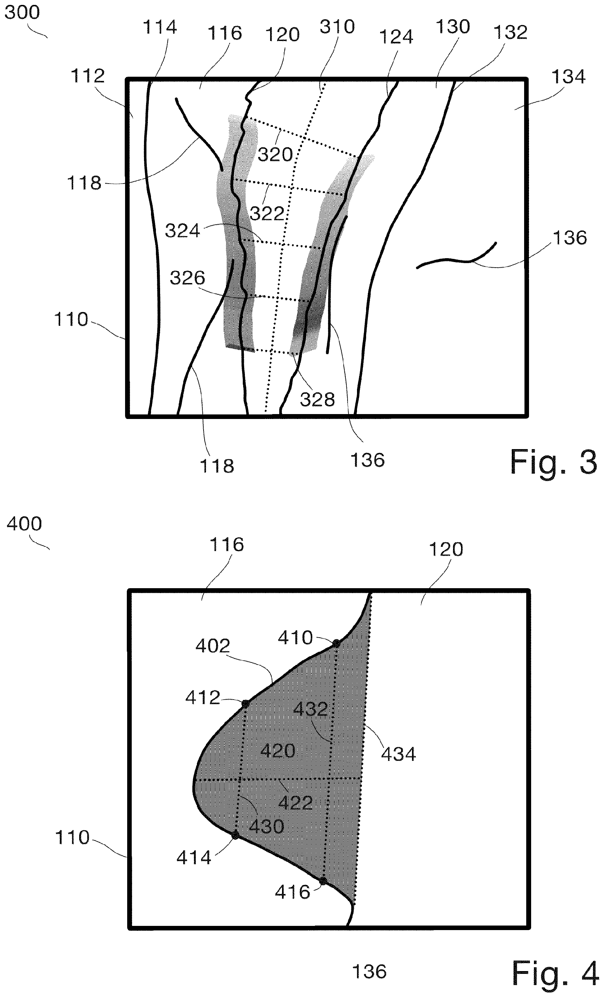

Fig. 3 illustrates a distance measurement according to an embodiment of this disclosure. It can be seen that in image 300 a centerline 310 is determined, which along its curvature is arranged exactly in the middle between the two layer edges 122 and 124. To determine one distance or two or more distances between the edges 122 and 124, connecting lines are determined that intersect the center line 310 perpendicularly and meet both edges 122 and 124. Each connecting line is bisected by the centerline 310. That means, each of the connecting lines comprises two linearly arranged bisectors. Also, each connecting line represents a respective distance 320, 322, 324, 326, 328, between the edges 122 and 124.

Fig. 4 illustrates a distance measurement according to an embodiment of this disclosure, wherein a convexly protuberant section of first edge 122 is examined. The image 400 shown in Fig. 4 is, for example, a magnified picture of sample 110, so that only the layers 116, 120 as well as the interjacent edge 122 are visible. As can be seen in image 400, the protuberant section of first edge 122 comprises an ascending branch 402 and a descending branch 404. The protuberant section encompasses a protuberant layer area 420 protruding from layer 120, thereby penetrating layer 116. In this embodiment, first protuberant points 410, 412 and second protuberant points 414, 416 are determined. The first protuberant points 410, 412 are located on the ascending branch 402, whereas the second protuberant points 414, 416 are located on the descending branch 404 of edge 122. A distance 430 between a first protuberant points 412, 414 and a distance 432 between the second protuberant points 410, 416 can be measured, in order to examine the protuberant layer area 420. In other words, according to this embodiment a respective distance between the opposing sides or branches 402, 404 of the edge 122 is determined. Additionally or alternatively, a protuberant layer centerline 422 can be determined in order to use it analogously as described before in connection with respect to Fig. 3. As further can be seen in Fig. 4, it is also possible to determine a borderline 434 of the protuberant layer area 420, wherein the protuberant layer area 420 is encompassed by the convexly protuberant section of first edge 122 and said borderline 434. In this case, the distances 430 and 432 can be parallel aligned to the borderline 434.

If the determination of the edges 122, 124 results in a plurality of first and/or second edge candidates, one embodiment provides that one or both of the edges 122, 124 is/are automatically determined based on the corresponding first or second edge candidates, respectively. Alternatively or additionally, the first edge 122 can be automatically determined by joining two or more of the first edge candidates, and - alternatively or additionally - the second edge 124 can be automatically determined by joining two or more of the second edge candidates.

Again referring to the case that the determination of the edges 122, 124 results in a plurality of first and/or second edge candidates. Then, in one embodiment the first edge 122 and/or the second edge 124 can be determined as the one of the corresponding edge candidates with the largest length, as the one of the corresponding edge candidates along which a maximal intensity change is determined, and/or as the one of the corresponding edge candidates along which the sum of intensity changes is maximal.

Further, if the determination of the edges 122, 124 results in a plurality of first and/or second edge candidates, in one embodiment the edge candidates are displayed by means of the user interface. Subsequently, a user information is obtained related to one or more edge candidates, and the first edge 122 and/or the second edge 124 are/is determined based on the obtained user information.

Some embodiments relate to a microscope comprising a system as described in connection with one or more of the Figs. 1 to 3. Alternatively, a microscope may be part of or connected to a system as described in connection with one or more of the Figs. 1 to 4.

Fig. 5 shows a schematic illustration of a system 500 configured to perform a method described herein. The system 500 comprises a microscope 510 and a computer system 520. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.
Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus."

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: image
- 110: sample
- 112: first left layer
- 114: edge
- 116: second left layer
- 118: streak
- 120: center layer
- 122: edge
- 124: edge
- 130: first right layer
- 132: edge
- 134: second right layer
- 136: streak
- 140: point
- 142: point
- 144: point
- 150: point
- 152: point
- 154: point
- 160: distance
- 162: distance
- 164: distance
- 200: image
- 210: area or segment
- 212: area or segment
- 214: area or segment
- 216: area or segment
- 220: area or segment
- 222: area or segment
- 224: area or segment
- 226: area or segment
- 230: distance
- 232: distance
- 234: distance
- 236: distance
- 300: image
- 310: centerline
- 320: distance
- 322: distance
- 324: distance
- 326: distance
- 328: distance
- 402: ascending branch of protuberant edge
- 404: descending branch of protuberant edge
- 410: protuberant point
- 412: protuberant point
- 414: protuberant point
- 416: protuberant point
- 420: protuberant layer area
- 422: protuberant layer centerline
- 430: distance
- 432: distance
- 434: borderline of the protuberant layer area
- 500: system
- 510: microscope
- 520: computer

## Claims

1. An imaging device for determining a thickness of a layer within an image, configured to:
- obtain an image (100) of a sample with one or more layers (112, 116, 120, 130, 134);
- obtain from a user interface a first estimation information (140, 142, 144) indicating a location of a first edge (122) of a layer;
- obtain from the user interface a second estimation information (150, 152, 154) indicating a location of a second edge (124) of the layer;
- determine the first edge (122) of the layer based on the first estimation information;
- determine the second edge (124) of the layer based on the second estimation information;
- determine a distance (160, 162, 164) between the first edge and the second edge.

2. The imaging device according to one of the preceding claims,
wherein the first and/or second estimation information can comprise one or more of:
- one or more points (140),
- one or more lines (210), or
- one or more areas (210).

3. The imaging device according to one of the preceding claims,
wherein the estimation information can comprise an area (210, 212, 214, 216) provided by a brush tool over a user interface.

4. The imaging device according to the preceding claim,
configured to:
- adjust a parameter of the brush tool, in particular one or more of
-- a width of the brush stroke;
-- a color of the brush stroke;
-- an opacity of the brush stroke.

5. **The** imaging device according to one of the preceding claims,
configured to:
- determine an edge (122, 124) based on the first and/or second estimation information based on one or more of:
-- an intensity difference within the respective estimation information;
-- a spectral difference within the respective estimation information;
-- a color difference within the respective estimation information;
-- a trained machine learning algorithm applied to the respective estimation information, in particular to the first and second estimation information.

6. The imaging device according to one of the preceding claims,
configured to:
- if the determination of a first and/or a second edge results in a plurality of first or second edge candidates, automatically determine a first edge based on the first edge candidates and/or a second edge based on the second edge candidates.

7. The imaging device according to the preceding claim,
configured to:
- determine the first and/or second edge (122, 124) as one or more of:
-- the edge candidate with the largest length;
-- the edge candidate along which a maximal intensity change is determined;
-- the edge candidate along which the sum of intensity changes is maximal.

8. The imaging device according to one of the preceding claims,
configured to:
- if the determination of a first and/or a second edge (122, 124) results in a plurality of first or second edge candidates:
-- display the edge candidates at a user interface;
-- obtain a user information related to one or more edge candidates;
-- determine the first edge and/or the second edge based on the obtained user information.

9. The imaging device according to one of the preceding claims,
configured to:
- divide the first edge (122) and/or the second edge (124) into multiple segments (210, 212, 214, 216, 220, 222, 224, 226);
- determine a distance (230, 232, 234, 236) of the layer for each segment.

10. The imaging device according to one of the preceding claims,
configured to:
- determine multiple distance candidates at different locations between the first and the second edge;
- determine the distance as the distance candidate with the shortest distance.

11. The imaging device according to the preceding claim,
configured to:
- determine further multiple distance candidates in a vicinity of the previously determined distance; and
- determine a second distance as the further distance candidate with the shortest distance.

12. The imaging device according to one of the preceding claims,
configured to:
- determine a protruding point at the first edge and/or at the second edge; and
- determine the distance based on one or both protruding points.

13. The imaging device according to one of the preceding claims,
configured to:
- determine a centerline (310) of the layer based on the determined first and second edge (122, 124); and
- determine one or more distances of the layer (320, 322), wherein one distance is determined as a line between the two edges that perpendicularly crosses the centerline.

14. The imaging device according to one of the preceding claims,
configured to:
- determine a convex side (420) of the first and/or second edge (410) and/or of a part of the first and/or second edge (410); and
- determine a distance (430, 432) between the opposing sides of the respective edge.

15. The imaging device according to one of the preceding claims,
configured to:
- determine a plurality of thicknesses for the layer;
- determine one or more of:
-- a maximum thickness of the layer;
-- a minimum thickness of the layer;
-- an average thickness of the layer;
-- a parameter that indicates a variation of a thickness of a layer.

16. A computer-implemented method for determining a thickness of a layer within an image,
comprising the steps:
- obtaining an image of a sample with one or more layers (100);
- obtaining from a user interface a first estimation information (140) indicating a location of a first edge of a layer;
- obtaining from the user interface a second estimation information (150) indicating a location of a second edge of the layer;
- determining the first edge (122) of the layer based on the first estimation information;
- determining the second edge (124) of the layer based on the second estimation information;
- determining a distance (160) between the first edge and the second edge.

17. Computer program with a program code
for performing the method according to the preceding claim when the computer program is run on a processor.
